# EUROPÄISCHE PATENTSCHRIFT

(11) **EP 1 586 522 B1**
(45) Veröffentlichungstag und Bekanntmachung des Hinweises auf die Patenterteilung: **13.12.2006**
(21) Anmeldenummer: 05102918.9
(22) Anmeldetag: 24.12.2002
(51) Int. Cl.: B65H 19/12

(54) **Verfahren zum Betreiben eines Transportsystems**
Method of operating a conveying system
Procédé de fonctionnement d'un système de transport

(30) Priorität: 26.03.2002 DE 10213459
(43) Veröffentlichungstag der Anmeldung: 19.10.2005
(62) Teilanmeldung aus: 02795049.2
(73) Patentinhaber: Koenig & Bauer Aktiengesellschaft, 97080 Würzburg (DE)
(72) Erfinder: Lehrieder, Erwin, 97253, Gaukönigshofen (DE)

(56) Entgegenhaltungen:
- EP-A- 0 633 207
- EP-A- 1 106 542
- DE-A1- 19 532 281
- DE-A1- 19 842 752
- US-A- 3 277 283
- US-A- 6 155 516

## Beschreibung

Die Erfindung betrifft ein Verfahren zum Betreiben eines Transportsystems gemäß dem Oberbegriff des Anspruchs 1.

Aus der WO 98/12 131 und der zugehörigen US 6,155,516 A ist ein solches Gütertransportsystem bekannt, dessen Transportwagen zum Transport und zur Zwischenlagerung von Papierrollen eingesetzt werden, die zum Einsatz in einer Druckmaschine vorgesehen sind. Die Schienen dieses Transportsystems sind unterhalb eines umgebenden Bodenniveaus angeordnet, und die Transportwagen haben eine geringfügig über das Bodenniveau hinausragende Tragplatte zum Aufnehmen der Papierrollen.

An einer Rollendruckmaschine können Papierrollen mit unterschiedlichen Eigenschaften (Grammatur, Oberflächenqualität, etc.) gleichzeitig zum Einsatz kommen. Diese müssen jeweils zur rechten Zeit dem richtigen Rollenwechsler zugeführt werden. Um dies zu vereinfachen, wird in der WO 98/28 213 vorgeschlagen, die in einem solchen Transportsystem transportierten Papierrollen mit einem berührungsfreien les- und beschreibbaren Datenträger auszustatten, der von an bestimmten Stellen an den Schienen angebrachten Schreib-/Leseeinrichtungen beschreibbar und lesbar ist. Diese Datenträger können jeweils mit Angaben über wichtige Eigenschaften einer Papierrolle beschrieben sein, so dass durch Auslesen dieser Eigenschaft mit Hilfe eines an geeigneter Stelle des Systems angebrachter Schreib-/Leseeinrichtung Klarheit über die Eigenschaften der an dieser Stelle befindlichen Rolle gewonnen werden kann, um z. B. die Rolle entsprechend diesen Eigenschaften zu einem für sie vorgesehenen Rollenwechsler weiterzuleiten.

Bei diesem bekannten Transportsystem muss jede Materialrolle, die sich in Reichweite des Transportsystems befindet, mit einem solchen Datenträger ausgestattet sein, um korrekt automatisch befördert werden zu können.

Sofern die Datenträger nicht nach Verbrauch einer Materialrolle wiedergewonnen und erneut verwendet werden, erhöhen sich die Kosten jeder Materialrolle um die Kosten des Datenträgers. Die Wiederverwendung der Datenträger ist jedoch mit Arbeits- und Organisationsaufwand verbunden. Wenn die Datenträger bereits vom Hersteller der Materialrollen angebracht werden, muss dafür gesorgt werden, dass die Datenträger verbrauchter Materialrollen vom Verbraucher zum Hersteller zurück befördert werden. Wenn der Verbraucher Materialrollen von diversen unterschiedlichen Herstellern bezieht, muss die Kompatibilität der Datenträger aller Hersteller gewährleistet sein. Wenn der Verbraucher selbst die Materialrollen mit den Datenträgern bestückt, ist er gezwungen, für jede Materialrolle, die durch Einstellen in ein Vorratslager oder auf andere Weise in die Reichweite des Transportsystems gebracht wird, deren Daten zu erfassen und auf dem an der Materialrolle montierten Datenträger einzutragen.

Da jede sich in Reichweite des Systems befindliche Materialrolle, gegebenenfalls also der gesamte Bestand in einem Vorratslager, mit einem Datenträger versehen sein muss, wird zur Implementierung des Systems eine große Zahl von Datenträgern benötigt.

Die DE 39 42 009 C2 beschreibt ein System zur Kontrolle und Überwachung der Verteilung von Gütern, bei dem Behälter mit einem wiederbeschreibbaren Datenträger versehen sind.

Die DE 44 46 203 A1 offenbart ein Verfahren zur digitalen Erfassung des Umlaufs von Bierfässern.

Durch die EP 06 33 207 A1 sind Schreib-/Leseeinrichtungen zum Schreiben und Lesen von Daten auf Datenträgern, die an Probeträgern angeordnet sind, bekannt.

Die EP 11 06 542 A1 offenbart ein Verfahren zum Betreiben eines Gütertransportsystems, wobei beim Beladen eines Transportmittels mit einem Gut Dateien eines Gutes in den Datenträger des Transportwagens geschrieben werden.

Die DE 198 42 752 A1 betrifft ein Verfahren zum Betrieb eines Transfersystems mit Werkstückträgern, wobei die Werkstückträger mit einer Datenladestation drahtlos Informationen austauschen.

Der Erfindung liegt die Aufgabe zugrunde, ein Verfahren zum Betreiben eines Transportsystems zu schaffen.

Die Aufgabe wird erfindungsgemäß durch die Merkmale des Anspruchs 1 gelöst.

Da beim Gütertransportsystem wenigstens ein Datenträger, insbesondere ein Transponder, an jedem Transportwagen montiert ist, der die Daten einer auf dem Transportwagen transportierten Materialrolle aufnehmen kann, ist es nicht mehr erforderlich, die zu transportierenden Güter jeweils einzeln mit Datenträgern zu versehen und diese nach Verbrauch der Güter zu entfernen. Da die Zahl der in einem solchen Gütertransportsystem im Einsatz befindlichen Transportwagen im allgemeinen kleiner ist als die Zahl der zu transportierenden Güter, die sich gleichzeitig in Reichweite des Transportsystems befinden können, reduziert sich auch die Anzahl der gleichzeitig benötigten Datenträger, so dass die Kosten für die Implementierung eines solchen Systems geringer sind, als wenn die Datenträger an den zu transportierenden Gütern selbst montiert sind. Da die Datenträger das Transportsystem nicht verlassen und somit mit den relevanten Daten der zu transportierenden Güter innerhalb des Systems beschrieben werden, fallen auch Kompatibilitätsprobleme fort, die sich sonst bei dem herkömmlichen System ergeben können, wenn Güter transportiert werden, die von ihren Herstellern jeweils mit unterschiedlichen Datenträgern ausgestattet worden sind.

Indem bei einem Transportsystem mit von einem Gehäuse umgebenen Schienen die Datenträger jeweils an einem in dem Gehäuse befindlichen Fahrgestellteil jedes Fahrzeugs montiert sind, sind sie vor Verschmutzung oder Beschädigung gut geschützt, und es wird ein hohes Maß an Zuverlässigkeit erreicht. Sinnvollerweise sind bei einem solchen System auch die Schreib-/Leseeinrichtungen in dem Gehäuse angeordnet.

Vorzugsweise ist ein solches System als Unterflur-Transportsystem ausgebildet, d. h. als Transportsystem, bei dem das Gehäuse der Schienen unter dem Niveau eines umgebenden Bodens liegt. Der Datenträger und/oder die zugehörigen Schreib-/Leseeinrichtungen sind dabei unterflur, d. h. unter dem Niveau des umgebenden Bodens angeordnet.

Einer bevorzugten Ausgestaltung zufolge weisen die Schienen des Transportsystems einen bezüglich einer horizontalen Ebene spiegelsymmetrischen Querschnitt mit zwei Schenkeln auf, wobei ein unterer Schenkel die Räder der Transportwagen trägt und ein oberer sich in geringem Abstand oberhalb der Räder erstreckt. Bei einem solchen System sind die Schreib-/Leseeinrichtungen zweckmäßigerweise auf halber Höhe der Schienen angeordnet. Dies vereinfacht die Montage der Schienen, da die Einbauhöhe einer Schreib-/Leseeinrichtung stets die gleiche ist, egal, welcher der zwei Schenkel der Schiene im System unten und welcher oben montiert wird.

Komplementär hierzu sind die Datenträger an den Transportwagen vorzugsweise in Achshöhe montiert, so dass sie mit den Schreib-/Leseeinrichtungen auf im wesentlichen gleichem Niveau liegen und diese in geringem Abstand passieren können. Insbesondere wenn die Datenträger an den Transportwagen jeweils an einer Radnabe montiert sind, kann ein sehr geringer Abstand zwischen Schreib-/Leseeinrichtung und Datenträger bei der Vorbeifahrt eines Transportwagens an der Schreib-/Leseeinrichtung erreicht werden.

Da bei dem System auch unbeladene Transportwagen mit einem Datenträger ausgerüstet sind, ist auch die Position solcher Wagen im Rahmen des Systems bequem erfassbar. Zu diesem Zweck ist es ferner vorteilhaft, wenn auf jedem Datenträger eine Bezeichnung gespeichert ist, die den Transportwagen eindeutig identifiziert, an welchem der Datenträger montiert ist.

Aufgrund der großen Lese-Reichweite ist eine weitgehende, vollkommene Verfolgung der Transportwagen im Schienensystem möglich.

Bei Ausfall der Stromversorgung ist eine vollständige Datenerhaltung der Transportwagen möglich.

Im Betrieb des Gütertransportsystems werden jeweils beim Beladen eines Transportwagens mit einem Gut Daten dieses Gutes in den Datenträger des Transportwagens geschrieben und beim Abladen des Gutes wieder gelöscht.

Bei einem Gütertransportsystem, das eine Mehrzahl von Aufladestellen zum Aufladen von Gütern auf die Transportwagen aufweist, ist es zweckmäßig, an jeder dieser Aufladestellen jeweils aufzuladende Güter mit gleichen Eigenschaften bereitzustellen. Dann können die beim Beladen eines Transportwagens an dieser Aufladestelle in dessen Datenträger zu schreibenden Daten stets die gleichen sein. D. h., für einen Betreiber des Gütertransportsystems genügt es, zu transportierende Güter jeweils nach ihren Eigenschaften sortiert an den verschiedenen Aufladestellen des Systems bereitzustellen; das Beschreiben der Datenträger mit den korrekten Werten der Eigenschaften der Güter kann dann vom System selbsttätig vorgenommen werden, ohne dass eine Erfassung der Eigenschaften jedes einzelnen Gutes erforderlich ist.

Wenn in dem Transportsystem Güter von einem Transportwagen auf einen anderen umgeladen werden, so werden zweckmäßigerweise an der Umladestelle die das Gut betreffenden Daten aus dem Datenträger des entladenen Transportwagens in den des beladenen transferiert.

Ausführungsbeispiele der Erfindung sind in den Zeichnungen dargestellt und werden im folgenden näher beschrieben.

Es zeigen:
- Fig. 1: eine schematische Draufsicht auf ein Gütertransportsystem;
- Fig. 2: einen Schnitt durch eine Schiene und einen Transportwagen des Gütertransportsystems;
- Fig. 3: eine Draufsicht auf einen Teil eines gegenüber der Ausgestaltung der Fig. 1 abgewandelten Gütertransportsystems.

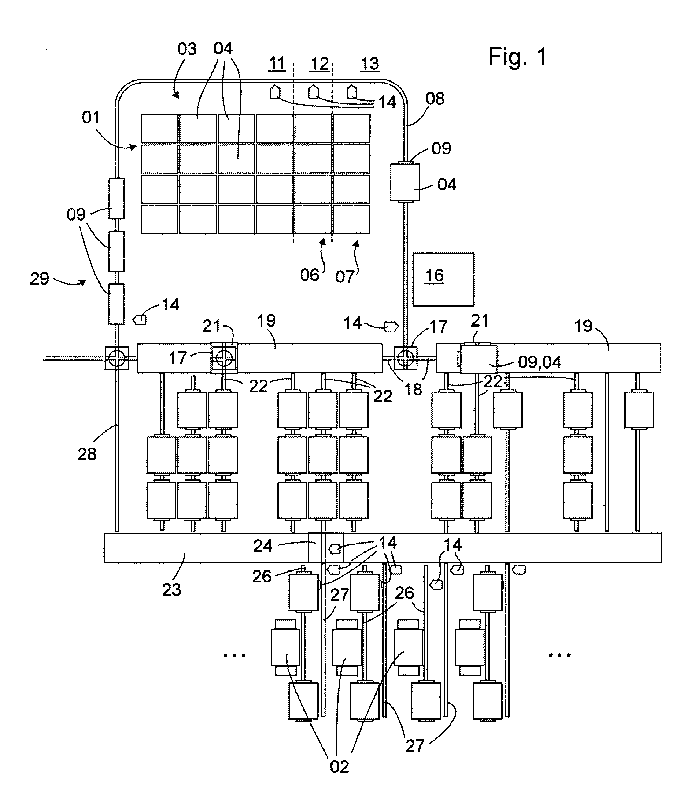

Fig. 1 zeigt eine schematische Draufsicht auf ein Transportsystem für den Transport von Materialrollen 04, z. B. Papierrollen 04, von einem Vorratslager 01 zu Rollenwechslern 02 einer Rollendruckmaschine.

Das Vorratslager 01 ist in eine Mehrzahl von Zonen unterteilt, die in der Fig. 1 durch gestrichelte Linien voneinander abgegrenzt sind und die jeweils vorgesehen sind, um Güter 04, insbesondere Papierrollen 04 unterschiedlicher Eigenschaften aufzunehmen, so z. B. einen vergleichsweise umfangreichen Bereich 03 für Materialrollen 04 einer Papierqualität, aus der die Innenseite einer Zeitschrift hergestellt werden soll, und kleinere Bereiche 06, 07 für Materialrollen 04 anderer Papierqualitäten, z. B. für die Herstellung des Außenblatts einer Zeitschrift.

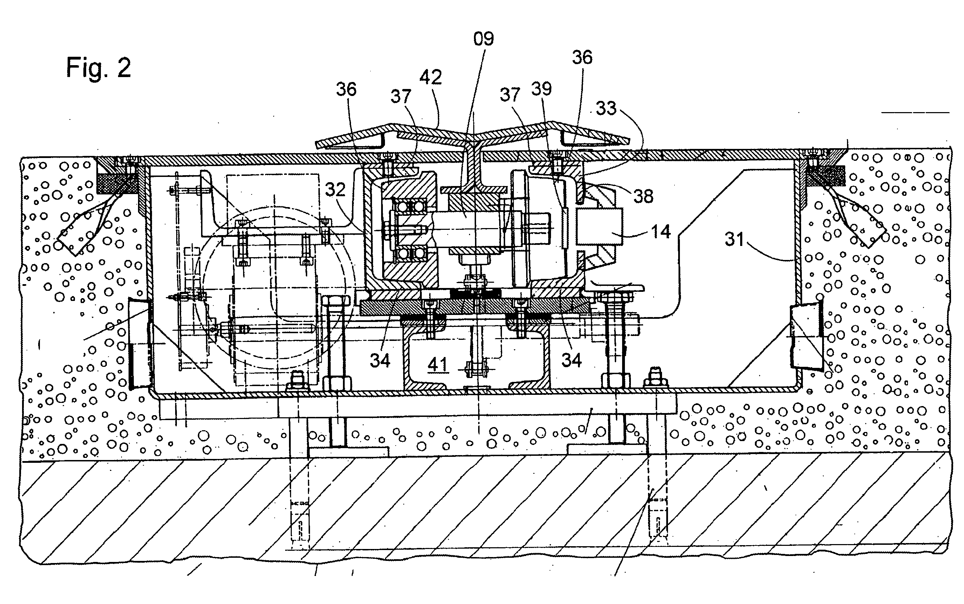

Ein Gleis 08, auf dem Transportwagen 09 bewegbar sind, erstreckt sich entlang des Vorratslagers 01. Jedem Bereich 03; 06; 07 des Lagers 01 ist am Gleis 08 eine Aufladestelle 11; 12 bzw. 13 zugeordnet, an der mit Hilfe von in der Fig. 1 nicht dargestelltem Werkzeug Materialrollen 04 auf die Transportwagen 09 aufladbar sind. An jeder Aufladestelle 11; 12; 13 befindet sich eine Schreib-/Leseeinrichtung 14, die dazu dient, einen Satz von Daten in einen Datenträger 39 (Fig. 2) eines Transportwagens 09 zu schreiben, der an der betreffenden Aufladestelle 11; 12; 13 beladen wird. Eine Verbindung mit z. B. automatischen Lesemöglichkeiten mittels eines Bar-Code-Lesers ist ebenfalls möglich. Jede dieser Schreib-/Leseeinrichtungen 14 schreibt stets den gleichen, für den ihr zugeordneten Bereich 03; 06 oder 07 des Lagers 01 bzw. die Eigenschaften der darin gelagerten Materialrollen 04 charakteristischen Datensatz bzw. des automatisch/manuell erfassten Datensatzes des Bar-Code-Lesers in den Datenträger 39 eines beladenen Transportwagens 09. Die Datenträger 39 weisen einen überschreibbaren Speicherbereich zum Speichern dieses Datensatzes sowie einen Nur-Lese-Bereich auf, in dem jeweils wenigstens eine eindeutige Bezeichnung des Transportwagens 09 gespeichert ist, an dem der Datenträger 39 montiert ist.

Die Materialrollen 04 sind in der Fig. 1 im Lager 01 liegend dargestellt; selbstverständlich ist auch eine stehende Lagerung möglich, wobei dann die zum Aufladen der Materialrollen 04 auf die Transportwagen 09 eingesetzten Werkzeuge in der Lage sein müssen, diese in eine horizontale Orientierung zu bringen.

Die im Vorratslager 01 aufgeladenen Materialrollen 04 erreichen zunächst eine Auspackstation 16, in der sie von ihrer Verpackung befreit werden.

Fig. 1 zeigt die Auspackstation 16 an einem einzigen Gleis 08 liegend. Diese Anordnung macht es erforderlich, eine ausgepackte Materialrolle 04 auf einen Transportwagen 09 auf dem gleichen Gleis 08 wieder aufzuladen, auf dem die Materialrolle 04 an der Auspackstation 16 angeliefert wurde.

Wird zum Aufladen der Materialrolle 04 der gleiche Transportwagen 09 verwendet, so ist eine Datenübertragung nicht notwendig.

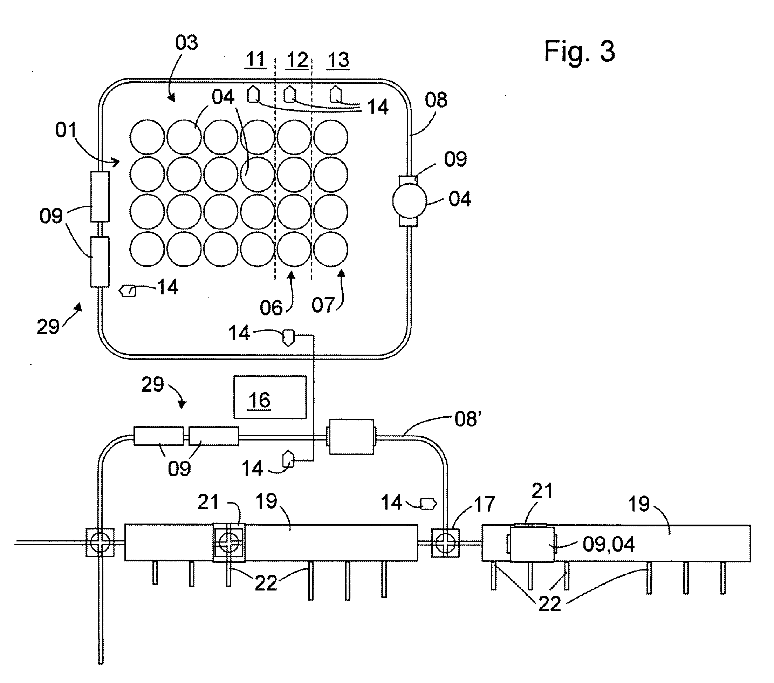

Bei der in Fig. 3 gezeigten Variante des Transportsystems bildet die Auspackstation 16 eine Schnittstelle zwischen einem Gleis 08, auf dem die Materialrollen 04 angeliefert werden, und einem Gleis 08', auf dem sie weiterbefördert werden.

Der Auspackstation 16 sind zwei Schreib-/Leseeinrichtungen 14 am Gleis 08 bzw. 08' zugeordnet, von denen erstere die Daten einer in die Auspackstation 16 übernommenen Materialrolle 04 vom Datenträger 39 eines Transportwagens 09 liest, der die Materialrolle 04 angeliefert hat, und an letztere überträgt, damit diese sie in den Datenträger 39 eines auf dem Gleis 08' auf die ausgepackte Materialrolle 04 wartenden Transportwagens 09 einträgt.

Bei dieser Variante können, wie in der Fig. 3 gezeigt, die Materialrollen 04 im Vorratslager 01 auch stehend gelagert sein; erst an der Auspackstation 16 werden sie in eine liegende Orientierung gekippt.

Aufbau und Arbeitsweise hinter der Auspackstation 16 sind bei beiden Varianten des Transportsystems identisch, soweit nicht anders angegeben, und werden im folgenden mit Bezug auf Fig. 1 beschrieben.

Nach dem Durchgang durch die Auspackstation 16 passiert der Transportwagen 09 mit der Materialrolle eine weitere Schreib-/Leseeinrichtung 14 und erreicht eine Drehscheibe 17. An dieser Drehscheibe 17 wird der Transportwagen 09 im Uhrzeigersinn oder Gegenuhrzeigersinn um 90° gedreht und über ein kurzes Gleisstück 18 vom gleichen Typ wie das Gleis 08 weiter befördert zu einer Transportbahn 19, auf der ein Trägerwagen 21 bewegbar ist. Rechts von der Drehscheibe 17 in der Fig. 1 ist der Trägerwagen 21 beladen mit einem Transportwagen 09 und einer darauf getragenen Materialrolle 04 gezeigt; auf der Transportbahn 19 links von der Drehscheibe 17 ist der Trägerwagen 21 unbeladen gezeigt, und man erkennt, dass er seinerseits eine Drehscheibe 17 analog der Drehscheibe 17 trägt.

Rechtwinklig von den Transportbahnen 19 ausgehende Gleisstücke 22 bilden ein Zwischenlager für Transportwagen 09, die mit für den alsbaldigen Verbrauch bestimmten Materialrollen 04 beladen sind.

Die Gleisstücke 22 enden jeweils an einer zweiten Transportbahn 23, auf der ein Trägerwagen 24 bewegbar ist, der in der Lage ist, einen Transportwagen 09 mitsamt Materialrolle 04 aufzunehmen. Der Trägerwagen 24 hat keine Drehscheibe 17, statt dessen aber eine Schreib-/Leseeinrichtung 14 zum Lesen der in den Datenträger 39 des Transportwagens 09 eingetragenen Datenwerte. An Hand dieser Datenwerte kann entschieden werden, zu welchem aus einer Mehrzahl von entlang der Transportbahn 23 angeordneten Rollenwechslern 02 der Trägerwagen 24 gefahren wird, um dort seine Fracht abzuladen. Jedem Rollenwechsler 02 sind zwei parallele Gleisstücke 26 bzw. 27 zugeordnet, ein Gleisstück 26 für mit vollen Materialrollen 04 beladene Transportwagen 09 und ein anderes Gleisstück 27 für leere Transportwagen 09, auf die Hülsen vom am Rollenwechsler 02 verbrauchten Materialrollen 04 oder nur teilweise verbrauchte Materialrollen 04 abgeladen werden. Jedes dieser Gleisstücke 26; 27 ist mit einer Schreib-/Leseeinrichtung 14 zum Erfassen der Daten von neu angelieferten Materialrollen 04 bzw. zum Eintragen der Daten von verbrauchten Materialrollen 04 oder teilweise verbrauchten Materialrollen 04, die vom Rollenwechsler 02 weg transportiert werden, versehen.

An einem Rollenwechsler 02 mit einer leeren Hülse beladene Transportwagen 09 werden über die Transportbahn 23 und ein Gleisstück 28 zurück befördert zu einer Wartezone 29 des Gleises 08, wo sie auf erneute Beladung am Vorratslager 01 warten. Eine Schreib-/Leseeinrichtung 14 am Eingang der Wartezone 29 erfasst die Bezeichnungen der eintreffenden Transportwagen 09 durch Lesen ihrer Datenträger 39.

Bei der Variante der Fig. 3 können zwei solche Wartezonen 29 vorhanden sein, eine auf der Schiene 08 für Transportwagen 09, die auf Beladung am Vorratslager 01 warten, und eine auf der Schiene 08' an der Auspackstation 16, für Transportwagen 09, die auf eine ausgepackte Materialrolle 04 warten.

Fig. 2 zeigt einen vertikalen Schnitt durch das Gleis 08; 18; 22; 26; 27 oder 28 in Höhe einer Schreib-/Leseeinrichtung 14 und einen darauf fahrenden Transportwagen 09.

Das Gleis 08; 18; 22; 26; 27; 28 ist Teil eines Unterflur-Fördersystems mit einem in einen umgebenden Fußboden eingelassenen Gehäuse 31. In dem Gehäuse 31 liegen sich zwei Schienen 32, 33 mit C-förmigem Querschnitt gegenüber. Ein unterer Schenkel 34 des C bildet eine Lauffläche für Räder 36 des Transportwagens 09; ein oberer Schenkel 37 erstreckt sich jeweils symmetrisch zum unteren Schenkel 34 in geringem Abstand oberhalb der Räder 36. In halber Höhe der die Schenkel 34, 37 verbindenden Seitenflanke 38 der linken Schiene 32 befindet sich eine Öffnung, in der eine Schreib-/Leseeinrichtung 14 montiert ist. Sie ist eingerichtet, ein Funksignal in Richtung des Transportwagens 09 auszustrahlen und ein Antwortsignal von dort zu empfangen.

In einem Kanal 41 unterhalb der Schienen 32, 33 verläuft eine Zugkette zum Antrieb der Transportwagen 09.

Das Fahrgestell des Transportwagens 09 liegt innerhalb des Gehäuses 31. Lediglich eine Trägerplatte 42 für die zu transportierenden Materialrollen 04 liegt außerhalb des Gehäuses 31 und über dem umgebenden Fußbodenniveau.

Der Transportwagen 09 trägt an der Nabe eines der rechten Schiene 33 zugewandten Rades 36 oder an einer anderen Stelle des Transportwagens 09 einen Transponder 39, der in der Lage ist, in einem von der Schreib-/Leseeinrichtung 14 ausgestrahlten Schreib-Funksignal codierte Daten zu extrahieren und zu speichern, sowie auf ein Lese-Funksignal von dieser ein mit den gespeicherten Daten codiertes Antwortsignal zu liefern und so als ein beschreibbarer Datenträger zu fungieren. Derartige Sende-/ Empfangseinrichtungen bzw. Transponder 39 sind bekannt und brauchen hier nicht im Detail beschrieben zu werden.

Bei dem hier betrachteten Ausführungsbeispiel der Erfindung sind die Sende-/ Empfangseinrichtungen 14 und die Transponder 39 auf jeweils einer Seite der Schiene 32; 33 bzw. der Transportwagen 09 angeordnet. Dies führt zu keinerlei praktischen Problemen, so lange sichergestellt ist, dass die Drehungen der Transportwagen 09 auf der Drehscheibe 17 bzw. dem Trägerwagen 21 einheitlich durchgeführt werden, so dass bei allen sich auf einem gleichen Gleisstück 08; 18; 22; 26; 27 befindenden Transportwagen 09 die Transponder 39 auf der gleichen Seite liegen.

Selbstverständlich ist es aber auch möglich, die Schreib-/Leseeinrichtungen 14 und die Transponder 39 jeweils paarweise auf verschiedenen Seiten der Gleise 08; 18; 22; 26; 27 bzw. der Transportwagen 09 anzuordnen und redundant zu betreiben.

### Bezugszeichenliste

- 01: Vorratslager
- 02: Rollenwechsler
- 03: Bereich
- 04: Gut, Rolle, Materialrolle, Papierrolle
- 05: -
- 06: Bereich
- 07: Bereich
- 08: Gleis, Gleisstück
- 09: Transportwagen
- 10: -
- 11: Aufladestelle
- 12: Aufladestelle
- 13: Aufladestelle
- 14: Schreib-/Leseeinrichtung
- 15: -
- 16: Auspackstation
- 17: Drehscheibe
- 18: Gleis, Gleisstück
- 19: Transportbahn
- 20: -
- 21: Trägerwagen
- 22: Gleisstück
- 23: Transportbahn
- 24: Trägerwagen
- 25: -
- 26: Gleis, Gleisstück
- 27: Gleis, Gleisstück
- 28: Gleis, Gleisstück
- 29: Wartezone
- 30: -
- 31: Gehäuse
- 32: Schienen links
- 33: Schienen rechts
- 34: Schenkel unten
- 35: -
- 36: Rad
- 37: Schenkel oben
- 38: Seitenflanke
- 39: Datenträger, Transponder
- 40: -
- 41: Kanal
- 42: Trägerplatte

- 08': Gleis

## Patentansprüche

1. Verfahren zum Betreiben eines Transportsystems, welches Materialrollen (04) von einem Vorratslager (01) zu Rollenwechslern (02) einer Rollenrotationsdruckmaschine transportiert, **dadurch gekennzeichnet, dass** beim Beladen eines Transportwagens (09) mit einer Materialrolle (04) Daten des Gutes (04) in den Datenträger (39) des Transportwagens (09) geschrieben und beim Abladen der Materialrolle (04) verändert oder gelöscht werden und dass die Daten von einem an einer Materialrolle (04) oder an einer Verpackung der Materialrolle angeordneten Datenträger ausgelesen und in den Datenträger (39) des Transportwagens (09) übertragen werden.

## Claims

1. A method of operating a conveying system which conveys rolls of material (04) from a store (01) to roll changers (02) of a web-fed rotary printing press, **characterized in that** data of the article (04) are written into the data carrier (39) of a conveying carriage (09) during the loading of the conveying carriage (09) with a roll of material (04) and are altered or deleted during the unloading of the roll of material (04), and the data are read out from a data carrier arranged on a roll of material (04) or on a package of the roll of material and are transferred into the data carrier (39) of the conveying carriage (09).

## Revendications

1. Procédé de fonctionnement d'un système de transport, transportant des rouleaux de matériau (04) venant d'un magasin de stockage (01) vers des changeurs de rouleaux (02) d'une machine à imprimer rotative à bobines, **caractérisé en ce que**, lors du chargement d'un chariot de transport (09) avec un rouleau de matériau (04), des données concernant le produit (04) sont écrites dans le support de données (39) du chariot de transport (09) et, lors du déchargement du rouleau de matériau (04), elles sont modifiées ou effacées, et **en ce que** les données sont lues depuis un support de données, disposé sur un rouleau de matériau (04) ou sur un emballage du rouleau de matériau, et sont transmises dans le support de données (39) du chariot de transport (09).
